# EUROPÄISCHE PATENTANMELDUNG

(11) **EP 0 853 074 A2**
(43) Veröffentlichungstag der Anmeldung: **15.07.1998**
(21) Anmeldenummer: 98890004.9
(22) Anmeldetag: 09.01.1998
(51) Int. Cl.: C05F 7/00, C05G 1/00

(54) **Verfahren zur Herstellung von Blumenerde**

(30) Priorität: 13.01.1997 AT 45/97
(71) Anmelder: Howorka, Franz, A-1021 Wien (AT); Buzetzki, Eduard, 7041 Wolkaprodersdorf (AT); Fischer, Franz, 7210 Mattersburg (AT); Glatter, Otto, 7023 Pöttelsdorf (AT)
(72) Erfinder: Buzetzki, Eduard, Ing., 7041 Wolkaprodersdorf (AT)
(74) Vertreter: Kliment, Peter

(57) **Zusammenfassung**

Bei einem neuen verfahren zur Herstellung von Blumenerde, wird Klärschlamm der Güteklassen I und II mit einem Feuchtigkeitsgehalt von 0 % bis 85 %, vorzugsweise von 60 % bis 85 %, auf eine Temperatur von 80°C bis 90°C erhitzt, mit Tonmineralien als Mineralzusatz und mit Torf als saurem Kohlenstoffträger versetzt und mit einem chemischen Desinfektionsmittel behandelt. Als Desinfektionsmittel wird bevorzugt Formaldehyd oder Dimethyldicabonat oder ein anderes in der Lebensmittelindustrie einsetzbares Mittel verwendet.

## Beschreibung

Gegenstand der vorliegenden Erfindung ist ein Verfahren zur Herstellung von Blumenerde.

Blumenerde oder Gartenerde ist ein Kultursubstrat, das für das Wachstum von Pflanzen die notwendigen Nährstoffe enthalten muß. Durch Normen und Düngemittelgesetz ist die Zusammensetzung von Blumenerde geregelt.

Gebrauchsfertige Blumenerde ist für Gärtnereien, in der Landwirtschaft und in Haushalten ein begehrtes Gut, das vielfach durch Kompostierung von Grünabfällen erhalten wird.

Eine andere Form der Unschädlichmachung von organischen Abfällen ist die Klärung von Abwässern in Kläranlagen, in welchen beträchtliche Mengen Klärschlamm anfallen. Klärschlamm wird je nach der Zusammensetzung in Güteklassen eingeteilt, wobei diese Einteilung in der Regel nach dem Schadstoffgehalt, insbesondere dem Gehalt an unerwünschten Schwermetallen, erfolgt. Klärschlamm der Güteklassen I und II hat einen Gehalt an Schwermetallen, der unterhalb von für Gärtnereibetriebe schädlichen Mengen liegt. Dagegen ist dieser Klärschlamm gegebenenfalls mit Keimen und/oder Bakterien verunreinigt, sodaß bei seiner Behandlung in diesem Sinne Vorsicht geboten ist.

Aus der Literatur sind verschiedene Verfahren zur Behandlung von Klärschlämmen bzw. zur Herstellung von Bodenverbesserungsmitteln bekannt.

So ist in der WO 85/04166 ist ein Verfahren zur Herstellung eines Bodenverbesserungsmittels beschrieben, gemäß welchem stabilisierter, teilentwässerter Klärschlamm mit einem porösen mineralischen, überwiegend körnigen Trägermaterial gemischt wird. Als solches Material wird bevorzugt gesiebte Ölschieferschlacke einer Korngröße von 0 bis 8 mm verwendet. Man erhält durch diese Maßnahme ein lager- und streufähiges Bodenverbesserungsmittel, dessen Herstellung gegenüber der landwirtschaftlichen Flüssigschlammverwertung eine ganzjährige Klärschlammentsorgung ohne Verlust der in dem Klärschlamm enthaltenen Dünge- und Humusstoffe ermöglicht.

In der DE OS 27 32 297 A1 ist ein Verfahren zur Verarbeitung von Klärschlamm durch Zusatz von Torf beschrieben.

Gemäß der DE 22 43 805 wird ein Bodenertragsverbesserungsmittel erhalten, indem Schlamm mit Sand und gegebenefalls ebenfalls Torf vermischt wird.

In der AT 398 196 B ist ein Verfahren zur Herstellung einer Pflanzensubstratmischung beschrieben, bei welchem ein keramikartiges Basismaterial mit Klärschlamm und Faserschlamm aus der Papier- und Zellstoffindustrie vermischt wird.

Die DE 964 603 C betrifft ein Verfahren zur Herstellung von langsam wirkenden Stickstoffdüngemitteln, bei welchem Harnstoff, ein Aldehyd und ein natürlicher, pflanzlicher, Humus erzeugender Stoff, wie z.B. Torf, innig vermischt werden. Die Mischung wird erhitzt, bis das Erzeugnis in streufähiger Form anfällt.

Gemäß der CH 185 428 A wird zur Herstellung eines aus Klärschlamm und Torfmull bestehenden Düngers ein Schlamm-Torf-Gemisch in Haufen geschichtet und im Inneren dieser Haufen eine durch organische Gärungsprozesse hervorgerufene Temperaturerhöhung abgewartet. Durch mehrfaches Umschichten gelangen auch die äußeren Anteile dieser Haufen zu den gewünschten Gärungsvorgängen. Gemäß dem Zusatzpatent CH 208 881 wird zu einem auf diese Weise hergestellten Dünger noch Steinmehl zugesetzt.

Die FR 1 187 241 A beschreibt ein Verfahren zur Herstellung von Düngemitteln, bei welchem Torf mit gelöstem Silizium-dioxid behandelt wird.

Aus der US 4 337 078 A ist ein Substrat für die Kultivierung von Pflanzen auf der Basis Zeolith, Vermiculit und Torf bekannt.

Zur Herstellung von Kompost wird gemäß der EP 0 153 282 ein Gemisch bestehend aus Klärschlamm, Torf als Kohlenstoffträger und einem Polyelektrolyten verwendet.

Das erfindungsgemäße Verfahren besteht nun darin, zur Herstellung von Blumenerde Klärschlamm der Güteklassen I und II mit einem Feuchtigkeitsgehalt von 0 % bis 85 %, vorzugsweise von 60 % bis 85 % (Trockenmasse 15 % bis 100 %, vorzugsweise 15 % bis 40 %) auf eine Temperatur von 80°C bis 90°C zu erhitzen, mit Tonmieralien, vorzugsweise Gerüst- und/oder Schichtsilikaten, als Mineralzusatz und Torf als saurem Kohlenstoffträger zu versetzen und mit einem chemischen Desinfektionsmittel zu behandeln.

Bevorzugt wird ein Desinfektionsmittel verwendet, welches sich mit organischer Substanz restlos zu neutralen Stoffen umsetzt wird. In der Lebensmittelindustrie verwendbare Desinfektionsmittel eignen sich besonders gut für diesen Zweck.

Als Desinfektionsmittel werden insbesondere Formaldehyd oder Dimethyldicarbonat verwendet. Formaldehyd setzt sich in Gegenwart von Sauerstoff und organischen Substanzen zu Ameisensäure um, während Dimethyldicarbonat zu CO₂ und Wasser abgebaut wird.

Durch die bevorzugte Verwendung von Desinfektionsmitteln, die sich zu neutralen Stoffen umwandeln, ist ein bedenkenloser Einsatz der so hergestellten Blumenerde in betrieblichem und privatem Bereich möglich.

Die Mineral- und Torfzusätze können in Abhängigkeit von dem verwendungszweck der hergestellten Blumenerde mengenmäßig variiert werden.

Auf diese Weise gelingt es, den in Kläranlagen anfallenden Klärschlamm, dessen Beseitigung vielfach problematisch ist, sinnvoll zu verwerten und eine begehrte Handelsware daraus herzustellen.

## Patentansprüche

1. Verfahren zur Herstellung von Blumenerde, dadurch gekennzeichnet, daß Klärschlamm der Güteklassen I und II mit einem Feuchtigkeitsgehalt von 0 % bis 85 %, vorzugsweise von 60 % bis 85 % (Trockenmasse 15 % bis 100 %, vorzugsweise 15 % bis 40 %), auf eine Temperatur von 80°C bis 90°c erhitzt, mit Tonmineralien, bevorzugt Gerüst- und/oder Schichtsilikaten, als Mineralzusatz und Torf als saurem Kohlenstoffträger versetzt und mit einem chemischen Desinfektionsmittel behandelt wird.

2. Verfahren nach Anspruch 1, dadurch gekennzeichnet, daß ein Desinfektionsmittel verwendet wird, welches sich mit organischer Substanz restlos in neutrale Stoffe umwandelt.

3. Verfahren nach Anspruch 1 oder 2, dadurch gekennzeichnet, daß als Desinfektionsmittel Formaldehyd oder Dimethyldicarbonat oder ein anderes in der Lebensmittelindustrie einsetzbares Mittel verwendet wird.
